Europäisches Patentamt

European Patent Office

Office européen des brevets

(19)

(11) EP 1 012 549 B1

(12) FASCICULE DE BREVET EUROPEEN

(45) Date de publication et mention
de la délivrance du brevet:
**17.11.2004 Bulletin 2004/47**

(21) Numéro de dépôt: **98945372.5**

(22) Date de dépôt: **24.09.1998**

(51) Int Cl.⁷: **G01J 9/00**

(86) Numéro de dépôt international:
**PCT/FR1998/002055**

(87) Numéro de publication internationale:
**WO 1999/015867 (01.04.1999 Gazette 1999/13)**

(54) **PROCEDE ET DISPOSITIF D'ANALYSE OPTIQUE DE SURFACE D'ONDE**

VORRICHTUNG UND VERFAHREN ZUR OPTISCHEN WELLENFRONTANALYSE

METHOD AND DEVICE FOR WAVEFRONT OPTICAL ANALYSIS

(84) Etats contractants désignés:
**DE FR GB IT**

(30) Priorité: **24.09.1997 FR 9711870**

(43) Date de publication de la demande:
**28.06.2000 Bulletin 2000/26**

(73) Titulaire: **Imagine Optic**
**91400 Orsay (FR)**

(72) Inventeurs:
• **BUCOURT, Samuel**
**F-91440 Bures sur Yvette (FR)**
• **LEVECQ, Xavier**
**F-91190 Gif sur Yvette (FR)**

(74) Mandataire: **Pontet, Bernard**
**Pontet Allano & Associés s.e.l.a.r.l.**
**25 rue Jean-Rostand**
**Parc Club Orsay Université**
**91893 Orsay Cédex (FR)**

(56) Documents cités:
**US-A- 4 737 621** **US-A- 5 233 174**
**US-A- 5 493 391**

• **SOUTHWELL W H: "WAVE-FRONT ESTIMATION FROM WAVE-FRONT SLOPE MEASUREMENTS" JOURNAL OF THE OPTICAL SOCIETY OF AMERICA, vol. 70, no. 8, août 1980, pages 998-1006, XP002051449 cité dans la demande**
• **WALLNER E P: "COMPARISON OF WAVEFRONT SENSOR CONFIGURATIONS USING OPTIMAL RECONSTRUCTION AND CORRECTION" PROCEEDINGS OF SPIE - WAVEFRONT SENSING, vol. 351, 24 - 25 août 1982, pages 42-53, XP002051451 SAN DIEGO, USA**
• **CUBALCHINI R: "MODAL WAVE-FRONT ESTIMATION FROM PHASE DERIVATIVE MEASUREMENTS" JOURNAL OF THE OPTICAL SOCIETY OF AMERICA, vol. 69, no. 7, juillet 1979, pages 972-977, XP002051450**

## Description

Le procédé et le dispositif selon l'invention concernent l'analyse de surface d'onde optique, c'est-à-dire la mesure de paramètres de forme de la surface d'un front d'onde, ou surface d'onde, pour des ondes de longueur d'onde ultraviolette, visible ou infrarouge. La surface d'onde est la cartographie de la phase du front d'onde.

Les paramètres de forme peuvent être, par exemple, la courbure, le tilt ou des aberrations géométriques classiques: aberration sphérique, astigmatisme, coma, etc.... Plus généralement, la phase $\Phi$ du front d'onde incident dans un système optique peut se décomposer sur une base de polynômes orthogonaux $P_i$ sur le support que constitue la pupille du système optique:

$$\Phi = \Sigma \ a_i \ P_i$$

La mesure des paramètres de forme consiste alors en la détermination des coefficients $a_i$. Dans le suite, on désignera le support que constitue la pupille du système optique par "le support du front d'onde".

Différents types de dispositifs sont connus pour faire de l'analyse de surface d'onde. Les dispositifs interférométriques par exemple déterminent la surface d'onde à partir de la figure d'interférence entre un front d'onde de référence et le front d'onde à étudier. La détection de la figure d'interférence se fait directement grâce à une mosaïque de détecteurs à deux dimensions (typiquement 512 x 512 détecteurs élémentaires ou "pixels") ce qui permet une résolution spatiale importante et une analyse très fine de la surface d'onde. Cependant, cette méthode met en oeuvre un traitement du signal lourd du fait de la quantité d'informations à gérer et présente de ce fait un temps de mesure long difficilement compatible avec des mesures en temps réel. Les dispositifs interférométriques sont d'autre part complexes à mettre en oeuvre et présentent des contraintes d'utilisation dues au mécanisme physique sur lequel ils sont basés: faible dynamique de mesure, fonctionnement en lumière monochromatique, difficulté d'analyse de front d'onde issus de systèmes dioptriques, impossibilité d'analyser un front d'onde issu directement d'une source telle qu'une diode laser par exemple.

Les analyseurs de front d'onde de type Shack-Hartmann ne présentent pas ces contraintes. Leur utilisation est classique par exemple en optique adaptative pour corriger en temps réel les perturbations de phase introduites par la turbulence sur la propagation des faisceaux optiques (brevet français ONERA FR A-2665955). D'autres documents décrivent des dispositifs basés sur la technologie Shack-Hartmann matriciel (voir par exemple les brevets US-A-4 737 621 et US-A-5 233 174). Le principe de l'analyseur Shack-Hartmann consiste à échantillonner le front d'onde optique grâce à une matrice à deux dimensions de systèmes optiques, classiquement des microlentilles sphériques, la matrice étant conjuguée de la pupille d'entrée du système optique. Chaque microlentille définit une sous-pupille et donne de l'objet une image. Les pentes locales de l'onde sont déterminées par le déplacement relatif de la tache focale par rapport à une position de référence correspondant à une onde plane, issue d'un objet à l'infini. La surface d'onde est reconstruite par intégration des mesures de pentes locales. Le principe mathématique de cette reconstruction est décrit par exemple dans l'article de SOUTHNELL W.H. ('Wave-front estimation from wave-front slope measurements' ,JOSA Vol.70 n° 8 pp 988-1006) pour l'estimation de la phase d'un front d'onde à support circulaire à partir des mesures de pentes locales. Afin de mesurer les déplacements, une mosaïque de détecteurs de type CCD est placée au foyer des microlentilles. La réalisation de ce type d'analyseur conduit à un instrument optique simple, compact, totalement achromatique.

Cependant, un inconvénient majeur des dispositifs de type Shack-Hartmann est dû à leur faible résolution spatiale. En effet, pour minimiser l'erreur de mesure sur la pente moyenne du front d'onde sur une sous-pupille, proportionnelle au déplacement de la tache image au foyer de la microlentille correspondante, il est nécessaire que la mesure de ce déplacement se fasse grâce à un nombre suffisant de pixels de la mosaïque de détecteurs. Classiquement, on associe environ 15x15 pixels à une sous-pupille. Ainsi, le nombre de sous-pupilles est limité par la taille de la mosaïque de détecteurs . Or l'erreur sur la reconstruction du front d'onde due à l'échantillonnage spatial de ce dernier est d'autant plus grande que le nombre de sous-pupilles est faible; d'une part à cause de l'effet de filtrage des fréquences spatiales élevées de la phase du front d'onde, d'autre part à cause du mauvais recouvrement géométrique du front d'onde optique avec la matrice de sous-pupilles. Le brevet US-A-5 493 391 propose un capteur à une dimension de distorsion d'un front d'onde, pour étudier des phénomènes de mécanique des fluides avec une très bonne résolution spatiale et temporelle, mais il ne permet pas de déterminer les paramètres de forme de l'ensemble de la surface du front d'onde.

D'autres types d'analyseurs de surface d'onde sont connus; par exemple, les analyseurs de courbure ou les analyseurs à décalage bilatéral ou trilatéral. Les principes physiques des moyens de détection utilisés dans tous ces dispositifs diffèrent mais tous mettent en oeuvre un procédé d'analyse de surface d'onde basé sur un traitement global de celle-ci: les moyens de détection comportent des mosaïques de détecteurs à deux dimensions permettant de détecter l'ensemble de la surface d'onde à analyser. Ce procédé présente deux inconvénients majeurs:

- Même si une application spécifique ne requiert que la mesure de certains paramètres de forme, le traitement des informations n'en sera pas moins important ni le temps de mesure plus faible.

- Ce procédé est lié à l'utilisation de mosaïques de détecteurs et à la technologie qui lui est propre, entraînant en particulier des limites dans la taille de la zone utile d'analyse. Cela explique que la plupart des analyseurs de surfaces d'onde connus nécessitent l'utilisation d'une optique de mise en forme pour adapter le diamètre du front d'onde au champ du dispositif d'analyse. D'autre part, cela entraîne une limitation de la résolution spatiale et de la précision de mesure en particulier dans les dispositifs de type Shack-Hartmann.

La présente invention rompt avec le procédé classique de l'analyse de la surface d'onde basée sur l'acquisition de l'ensemble du front d'onde et propose un procédé pour l'analyse de la surface d'un front d'onde basé sur une acquisition ligne par ligne du front d'onde et une méthode de mesure des paramètres de forme qui lui est adaptée.

Plus précisément, l'invention a pour objet un procédé de mesure d'un nombre donné de paramètres de forme de la surface d'un front d'onde optique de support donné, les paramètres de forme étant les coefficients d'une décomposition de la phase du front d'onde sur une base de polynômes orthogonaux sur ledit support, caractérisé en ce qu'il comporte

- l'acquisition d'au moins deux lignes distinctes du front d'onde comprenant pour chaque ligne d'onde, la détection optique de ladite ligne délivrant un signal électrique la caractérisant, et le traitement dudit signal permettant de déterminer un ensemble de paramètres proportionnels aux valeurs de la phase du front d'onde, ou d'une dérivée $n^{\text{ème}}$ de ladite phase, mesurées sur ladite ligne,
- le calcul, à partir des ensembles correspondant auxdites lignes d'onde, desdits paramètres de forme.

Avantageusement, l'étape de calcul comporte une étape de reconstruction de chaque ligne d'onde consistant par exemple à exprimer la phase de chaque ligne d'onde sur une base de polynômes orthogonaux, puis une étape de reconstruction de la surface d'onde à partir des lignes reconstruites.

L'invention a également pour objet un dispositif de mesure de paramètres de forme de la surface d'un front d'onde qui met en oeuvre le procédé selon l'invention.

Le dispositif selon l'invention comprend avantageusement pour la détection d'une ligne d'onde un module de détection comprenant notamment un ensemble de systèmes optiques disposés linéairement et une barrette de détecteurs. Les barrettes de détecteurs sont plus faciles à réaliser que les mosaïques de détecteurs à deux dimensions équivalentes et, à coût égal, ont donc une dimension plus importante. Par conséquent, la résolution spatiale peut être améliorée par rapport à celle obtenue par les analyseurs de front d'onde matriciels de type Shack-Hartmann. Le dispositif selon l'invention permet en outre de s'affranchir, dans la plupart des cas, d'une optique de mise en forme généralement nécessaire dans les dispositifs d'analyse de front d'onde de l'art antérieur pour adapter le diamètre du front d'onde au champ du système d'analyse.

Le dispositif selon l'invention présente également l'avantage d'être modulaire et adaptable. En effet, le nombre de lignes du front d'onde à acquérir dépend du nombre et de la nature des paramètres de forme que l'on cherche à mesurer. Ainsi la puissance de calcul et le temps de mesure sont adaptés à chaque application. Le procédé et le dispositif selon l'invention sont définis dans les revendications indépendantes 1 et 7. Les modes particuliers de réalisation de l'invention sont définis dans les revendications dépendantes 2 à 6 et 8 à 13.

D'autres avantages et caractéristiques de l'invention apparaîtront plus clairement à la lecture de la description suivante, illustrée par les dessins annexés, qui représentent:

- la figure 1, les principales étapes du procédé selon l'invention,
- la figure 2, un exemple d'acquisition de 4 lignes d'onde,
- la figure 3A, un exemple de réalisation d'un dispositif selon l'invention,
- la figure 3B, un élément du dispositif décrit dans la figure 3A,
- la figure 4, un autre exemple de dispositif selon l'invention,
- les figures 5A et 5B, l'échantillonnage matriciel à deux dimensions et ligne par ligne d'un front d'onde circulaire,
- la figure 6, un schéma de principe de détection d'une ligne d'onde,
- la figure 7, l'expression d'une matrice utilisée dans la reconstruction de la surface d'onde,
- les figures 8A et 8B des diagrammes illustrant selon un exemple, le résultat d'une méthode de reconstruction mise en oeuvre dans le procédé selon l'invention.

Dans la description qui suit, les mêmes références se rapportent aux mêmes éléments.

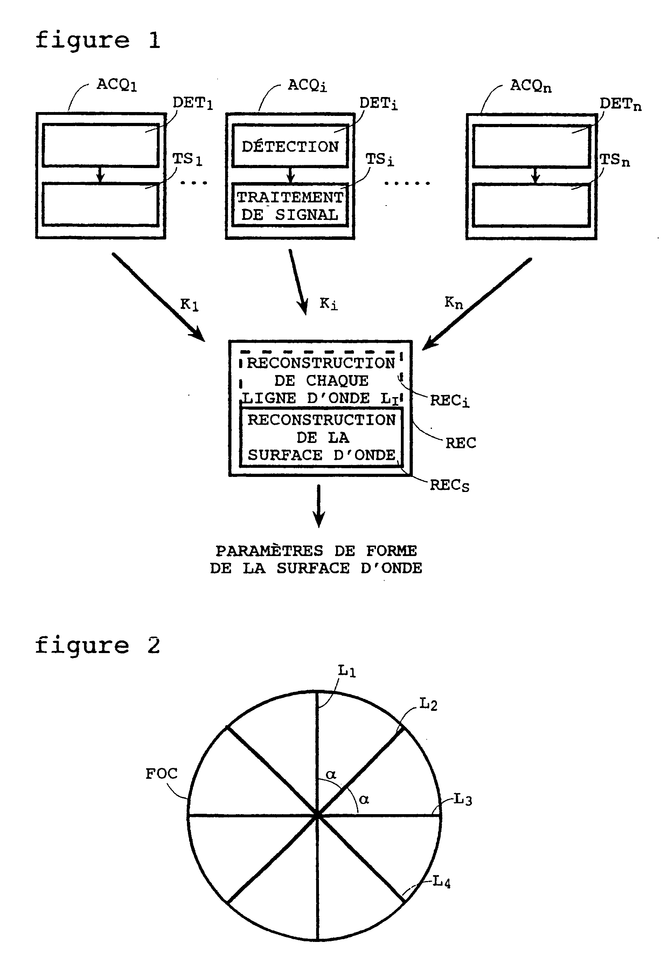

La figure 1 illustre le procédé selon l'invention. Les n étapes d'acquisition $ACQ_i$, $n \geq i \geq 1$, permettent l'acquisition de n lignes d'ondes. On appelle ligne d'onde ou ligne du front d'onde, une partie longiligne du front d'onde. Chaque étape d'acquisition $ACQ_i$ consiste en une première étape de détection $DET_i$ de la ligne d'onde par des moyens optiques appropriés, ces moyens délivrant un signal électrique caractérisant la ligne d'onde, puis en une seconde étape $TS_i$ de traitement du signal électrique permettant de déterminer un ensemble $K_i$ de

paramètres $k_{ij}$ caractéristiques de la phase de la ligne d'onde; la phase de la ligne d'onde est un ensemble de valeurs de la phase du front d'onde mesurées sur ladite ligne. Les paramètres $k_{ij}$ sont par exemple des valeurs proportionnelles à celles de la phase du front d'onde ou d'une dérivée de la phase, mesurées sur la ligne. Les n étapes de détection et de traitement du signal peuvent être menées soit en série, soit en parallèle, ce qui permet d'optimiser la mise en oeuvre du procédé en vitesse. Pour augmenter la précision de mesure, on peut procéder à plusieurs étapes d'acquisition sur une même ligne d'onde et faire une moyenne soit au niveau de l'étape de détection, soit au niveau de l'étape de traitement du signal.

L'étape de reconstruction REC permet de reconstruire la surface d'onde, c'est-à-dire calculer les paramètres de forme de celle-ci, à partir des ensembles $K_i$ de paramètres $k_{ij}$ correspondant aux lignes d'onde $L_i$ acquises. Les paramètres $k_{ij}$ sont par exemples des valeurs proportionnelles aux valeurs de la phase ou d'une dérivèe $n^{ème}$ de la phase mesurées sur la ligne, comme cela est décrit plus loin. Avantageusement, la reconstruction comporte une étape de reconstruction de chaque ligne d'onde, consistant par exemple à exprimer la phase de chaque ligne d'onde sur une base de polynômes orthogonaux, puis une étape de reconstruction de la surface d'onde à partir des lignes reconstruites. Des exemples de reconstruction mis en oeuvre dans le procédé sont donnés par la suite.

Le nombre et la nature des paramètres de forme que l'on peut obtenir dépendent du nombre d'acquisitions de lignes d'onde distinctes. Considérons par exemple le cas d'un front d'onde à support circulaire. La phase de ce front d'onde est classiquement décomposée sur la base des polynômes de Zernike, ensemble de fonctions orthogonales sur un support circulaire de rayon 1. Ces fonctions présentent l'avantage d'être couramment manipulées par les opticiens car elles donnent les aberrations géométriques connues. L'acquisition de deux lignes d'onde perpendiculaires, sécantes en leur centre, donnent 21 des 36 premiers polynômes de Zernike (les plus classiquement utilisés), l'acquisition de quatre lignes d'onde concourantes en leur centre et faisant un angle de 45° entre elles donnent 32 des 36 premiers polynômes et l'acquisition de huit lignes d'onde concourantes en leur centre et faisant un angle de 22,5° entre elles donnent les 64 premiers polynômes de Zernike. A titre d'exemple, la figure 2 représente un front d'onde circulaire FOC, analysé par le procédé selon l'invention dans lequel est faite l'acquisition de 4 lignes d'ondes $L_1$, $L_2$, $L_3$, $L_4$ distinctes, concourantes en leur centre, et faisant un angle $\alpha$ de 45° entre elles. Ces exemples montrent comment le procédé selon l'invention est modulable; il est adapté aux paramètres de forme que l'on recherche; ainsi, la puissance de calcul et le temps de mesure sont adaptés à chaque application.

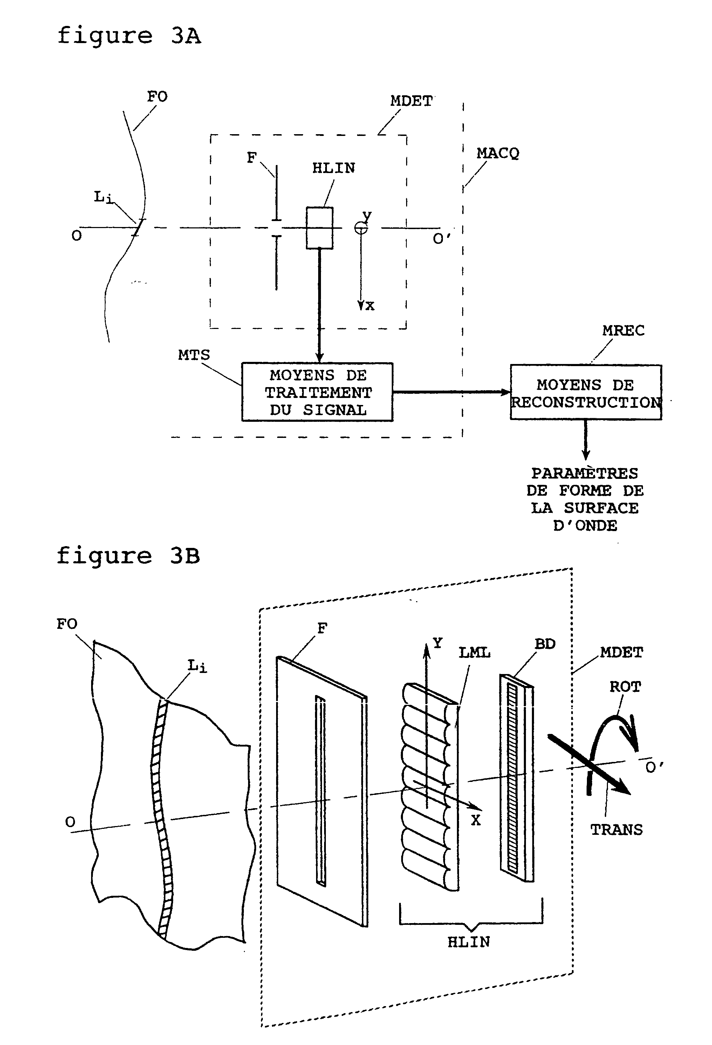

Le procédé décrit peut être mis en oeuvre avec le dispositif selon l'invention. Les figures 3A et 3B illustrent un exemple de réalisation de ce dispositif.

On considère un front d'onde FO incident dans le dispositif. Le front d'onde est issu d'une source cohérente ou incohérente, émettant à une longueur d'onde choisie par l'opérateur; elle peut même être polychromatique: dans ce cas, le dispositif analyse un front d'onde moyen. Le dispositif illustré figure 3A comprend des moyens d'acquisition MACQ d'une ligne ou de plusieurs lignes du front d'onde permettant de déterminer pour chaque ligne d'onde $L_i$ acquise un ensemble $K_i$ de paramètres $k_{ij}$ caractéristiques de la dérivée de la phase de la ligne ou de la phase elle-même de la ligne et des moyens de reconstruction MREC de la surface d'onde.

Les moyens d'acquisition MACQ comprennent des moyens de détection MDET centrés sur un axe OO'. Dans l'exemple illustré par la figure 3A, les moyens de détection comportent une fente F et un module de détection HLIN. La fente F permet une présélection de la zone dans laquelle se situe la ligne d'onde $L_i$ que l'on veut détecter. Elle permet de limiter les éclairages parasites en limitant l'ouverture du système. Selon un exemple, le module de détection HLIN est composé d'une ligne de systèmes optiques et d'un détecteur positionné dans un plan proche du plan focal des systèmes optiques. Chaque système optique constitue une sous-pupille. Les systèmes optiques peuvent être des lentilles ou des microlentilles. La forme de ces lentilles ou microlentilles peut être par exemple sphérique, asphérique ou cylindrique. Le détecteur peut être par exemple une barrette de détecteurs, c'est-à-dire un détecteur comportant un ensemble de détecteurs élémentaires (ou pixels) agencés selon une ligne ou selon plusieurs lignes, présentant ainsi une longueur au moins 10 fois supérieure à la largeur; il s'agit par exemple d'une barrette CCD ou d'une barrette de photodiodes. La fente et le module de détection sont orientés selon un axe y perpendiculaire à l'axe OO'.

La figure 3B décrit plus précisément des moyens de détection MD comprenant une fente F et un module HLIN constitué d'une ligne LML de microlentilles cylindriques dont les génératrices sont parallèles à l'axe x, l'axe x étant perpendiculaire aux axes OO' et y, ainsi qu'une barrette de détecteurs BD de type barrette CCD. La ligne LML peut être composée typiquement de 100 microlentilles jointives, de 10 mm de focale, de longueur environ 10 mm selon la génératrice (axe x) et d'environ 300 microns dans l'autre direction (axe y). La barrette de détecteurs est constituée par exemple de 2048 pixels, carrés, de côté 14 microns, alignés selon l'axe y sur une longueur de 28,7 mm.

Dans cet exemple, les dimensions et l'orientation de la ligne d'onde détectée sont limitées par celles de la barrette de détecteurs: la plus grande dimension de la ligne d'onde détectée est la longueur de la barrette de détecteurs (selon la direction y), soit 28,7 mm, et sa plus petite dimension est la largeur de la barrette de détecteurs (selon x), soit 14 microns. Notons que dans le cas d'une ligne de microlentilles sphériques, la plus petite dimension de la ligne d'onde serait donnée par la taille selon l'axe x des microlentilles sphériques, soit typiquement 300 microns. On mesure ainsi un des avantages de l'utilisation de microlentilles cylindriques dans le dispositif décrit dans cet exemple. Un autre avantage réside dans le fait que si le front d'onde incident présente un basculement suivant x, la détection ne sera pas perturbée puisque selon cet axe, les microlentilles cylindriques sont équivalentes à des lames à faces planes et parallèles. Par contre, si des microlentilles sphériques sont utilisées, la détection ne sera possible que si le basculement est inférieur à l'angle apparent sous lequel est vu le détecteur dans sa largeur.

Les moyens de détection de la figure 3B comprennent aussi des moyens de rotation autour de l'axe OO' de l'ensemble constitué de la fente F et du module de détection HLIN, ou des moyens de translation de cet ensemble selon l'axe x, ou une combinaison des deux. Ces moyens, non représentés sur la figure 3B, sont symbolisés par des flèches indexées ROT et TRANS. Ils permettent d'acquérir plusieurs lignes d'onde pour une analyse fine de la surface d'onde. Il est nécessaire que chacune des lignes d'onde acquises soit sécante à au moins une autre ligne d'onde; cela permet en effet d'établir une origine de phase. Notons que la rotation du module de détection peut introduire un basculement du module, même très faible, qui peut générer des erreurs sur l'analyse du front d'onde. Nous expliquons dans la suite comment le procédé selon l'invention permet de s'affranchir des basculements introduits par rotation.

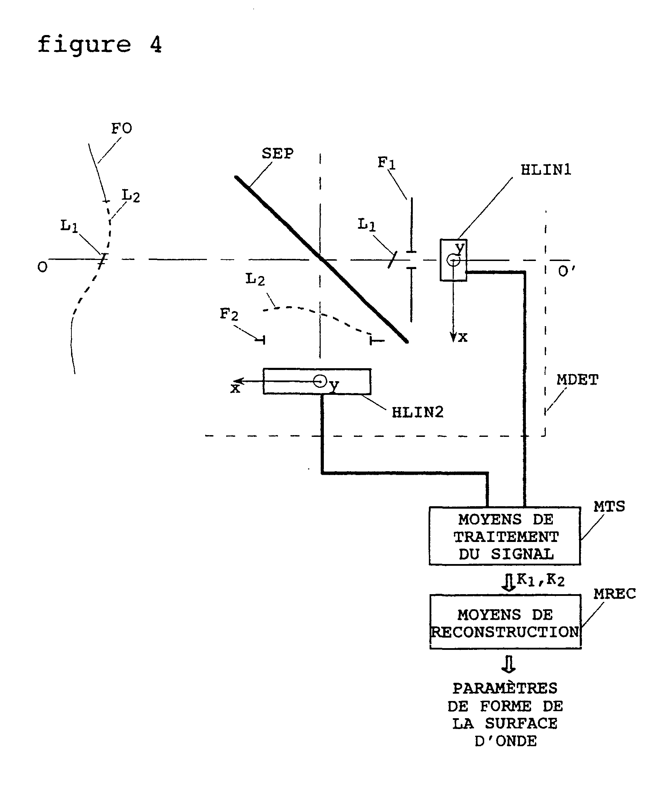

Une autre façon d'acquérir plusieurs lignes d'onde est illustré grâce à un autre exemple de réalisation du dispositif selon l'invention schématisé sur la figure 4. Deux modules de détection $HLIN_1$ et $HLIN_2$ sont disposés sur une même plate-forme et séparés par un élément séparateur de faisceau SEP comme par exemple une lame séparatrice. Ils permettent de détecter simultanément deux lignes d'ondes orthogonales $L_1$ et $L_2$ du front d'onde FO. Les moyens de traitement du signal MTS traitent les deux signaux électriques pour obtenir un échantillonnage des deux profils de la dérivée de la phase au FO. Cette mise en oeuvre particulière permet l'acquisition de lignes d'onde deux à deux plutôt qu'une par une dans les dispositifs exposés figures 3A et 3B. Des moyens de rotation et/ou de translation peuvent également être mis en place pour déplacer l'un ou l'autre des modules de détection ou les deux.

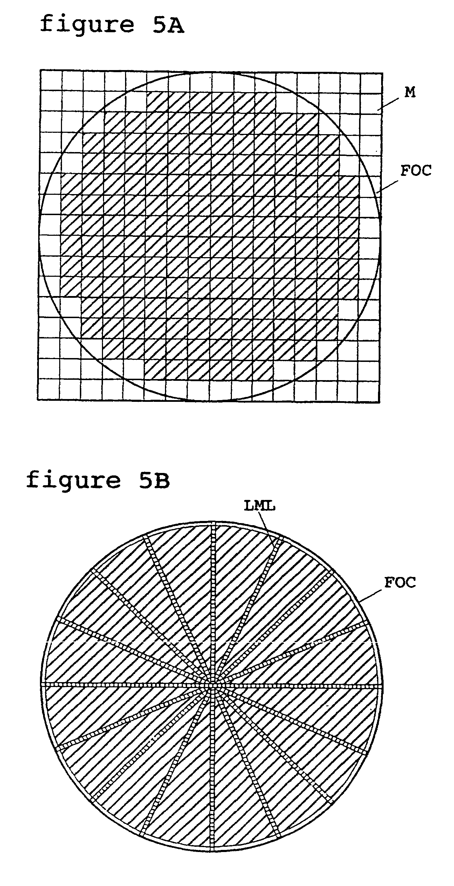

Les figures 5A et 5B illustrent par un exemple comment le dispositif selon l'invention décrit par exemple dans les figures 3A, 3B et 4 permet d'augmenter la précision de mesure par rapport à un analyseur Shack-Hartmann matriciel de l'art antérieur. La figure 5A montre l'échantillonnage matriciel d'un front d'onde circulaire FOC. On considère par exemple une matrice M de 16 x 16 sous-pupilles à section carrée illuminée par le front d'onde FOC. Cette configuration est classique dans les dispositifs existants et correspond par exemple à l'utilisation d'un détecteur de 512 x 512 pixels avec un champ d'analyse carré d'environ 5 mm de côté. Le diamètre du front d'onde FOC, par exemple égal à 30 mm, a été adapté à la taille de la matrice par une optique de mise en forme. La figure 5A montre que plus d'un quart des sous-pupilles illuminées ne le sont que partiellement (les sous-pupilles complètement illuminées sont hachurées), introduisant une erreur lors de la reconstruction de la surface d'onde et donc une incertitude pouvant être importante sur la détermination des paramètres de forme. La figure 5B illustre l'analyse d'un front d'onde par un dispositif du type de celui décrit dans les figures 3A et 3B mettant en oeuvre le procédé selon l'invention. On considère à nouveau le front d'onde circulaire FOC de la figure 5A mais aucune optique de mise en forme n'est utilisée. La détection ligne par ligne du front d'onde se fait par exemple au moyen d'un module de détection comme il est décrit dans la figure 3B. La dimension du champ d'analyse est d'environ 29 mm. La figure 5B montre le très faible nombre de sous-pupilles partiellement illuminées par rapport au nombre de sous-pupilles complètement illuminées (hachurées). L'erreur sur la reconstruction due au mauvais recouvrement géométrique est donc minimisée. Dans la pratique, on pourra s'affranchir de façon systématique des mesures données par les microlentilles placées aux extrémités de la ligne LML. On supprime ainsi l'erreur de recouvrement géométrique et la précision de mesure reste bonne car le nombre de sous-pupilles reste important.

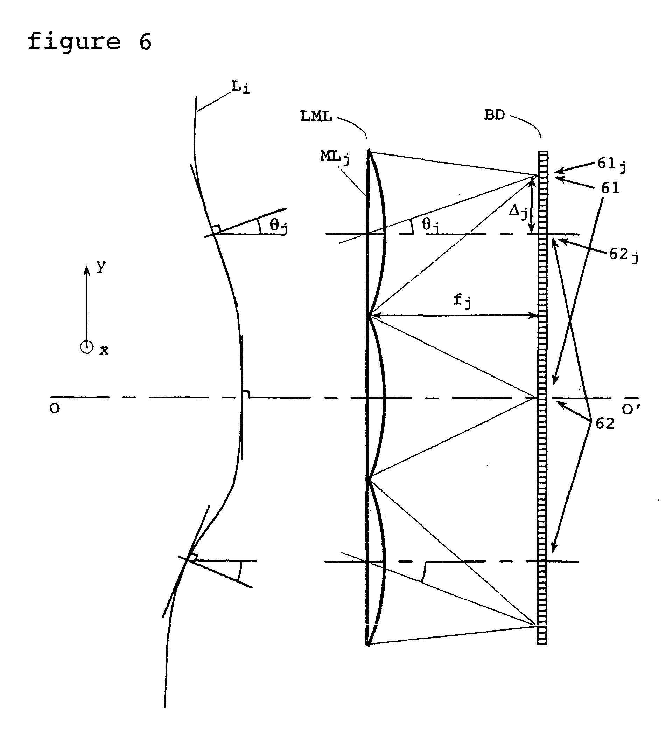

Nous décrivons ci-dessous l'étape d'acquisition d'une ligne d'onde $L_i$ selon une variante. Les moyens de détection sont par exemple du type de ceux décrits dans la figure 3B. L'ensemble constitué de la fente et du module de détection est orienté selon l'axe y. Le principe physique permettant de déterminer l'ensemble $K_i$ des paramètres $k_{ij}$ à partir des moyens de détection ci-dessus décrits est illustré sur la figure 6. Il s'agit d'une méthode classique pour déterminer la pente locale du front d'onde, similaire à celle utilisée sur les analyseurs Shack-Hartmann matriciels. Nous rappelons simplement cette méthode en ne représentant que quelques microlentilles. La figure 6 présente une coupe du module de détection HLIN de la figure 3B dans un plan défini par les axes OO' et y. Seulement 3 microlentilles de la ligne LML de microlentilles sont représentées. La portion de flux collectée par chaque microlentille $ML_j$ est focalisée en une tache lumineuse $61_j$ sur la barrette de détecteur BD. On obtient alors l'ensemble 61 des tâches lumineuses. Le signal électrique caractérisant la ligne $L_i$, délivré par les moyens de détection décrits dans cet exemple, correspond au profil des taches lumineuses 61.

L'étape de traitement du signal consiste ici à déterminer la pente locale de la phase au niveau de chaque microlentille. La tache $61_j$ est caractérisée par exemple par son barycentre. On définit également l'ensemble 62 des "points focaux sur l'axe" 62j, représentant les taches lumineuses obtenues lorsque le front d'onde étudié est parfaitement plan et parallèle à la ligne de microlentilles LML et caractérisées également par leur barycentre. La distance séparant la position du barycentre de la taches $61_j$ de celle du barycentre du point focal sur l'axe $62_j$ correspondant est proportionnelle à la pente locale $\tan(\theta_j)$ de la ligne d'onde au niveau de la microlentille $ML_j$ considérée. $\tan(\theta_j)$ est la pente locale selon l'axe de la ligne LML de microlentilles car dans l'exemple considéré, les microlentilles sont cylindriques. Soit $\Delta_j$ cette distance et $f_j$ la distance entre la microlentille $ML_j$ et le détecteur BD, la pente locale $\tan(\theta_j)$ vaut:

$$\tan(\theta_j) = \frac{\Delta_j}{f_j}$$

La pente locale $\tan(\theta_j)$ correspond à la valeur moyenne $\Phi'_{ij}$ de la dérivée de la phase de la ligne d'onde $L_i$ au niveau de la sous-pupille $Sp_j$ définie par la microlentille $ML_j$. Dans ce cas, l'ensemble $K_i$ est constitué des valeurs $\Phi'_{ij}$.

Selon une variante préférentielle, l'étape de reconstruction de la surface d'onde peut se décomposer en une étape $REC_i$ (voir figure 1) de reconstruction de chaque ligne d'onde $L_i$ consistant par exemple à déterminer le profil $\Phi_i$ de la phase de ladite ligne, puis une étape $REC_s$ de reconstruction de la surface d'onde proprement dite à partir des lignes reconstruites.

Considérons tout d'abord la reconstruction d'une ligne d'onde $L_1$. À partir des valeurs $\Phi'_{1j}$, déterminées par exemple selon l'étape d'acquisition décrite précédemment, le procédé selon l'invention comprend par exemple la reconstruction du profil de la dérivée de la phase ou le profil de la phase elle-même de la ligne d'onde $L_1$. Cette reconstruction peut être effectuée à l'aide d'un formalisme polynomial. Dans le procédé selon l'invention, on utilise par exemple la base des polynômes de Legendre $\{Leg_i\}$ qui sont orthogonaux suivant une ligne pour exprimer la phase de la ligne d'onde. Le profil de phase $\Phi_1$ de la ligne d'onde $L_1$ est alors décrit par:

$$\Phi_1 = \Sigma\ v_{1i}\ Leg_i$$

Le vecteur de reconstruction $V_1 = (v_{1l}, ..., v_{1i}, ..., v_{1p})$ constitué des coefficients affectant les polynômes de Legendre $Leg_i$ forme alors un ensemble de paramètres permettant d'exprimer la phase de la ligne d'onde $L_1$. La taille de ce vecteur est égale au nombre p des premiers polynômes de Legendre choisis dans ce cas pour effectuer la reconstruction. Le nombre p peut être choisi en fonction du nombre de sous-pupilles du module de détection (la valeur de p ne peut excéder le nombre de sous-pupilles), en fonction des paramètres de forme recherchés, en fonction du temps de calcul disponible etc. Concrêtement. le vecteur $V_1$ est par exemple le résultat de la multiplication matricielle d'une matrice [MD] de détermination par le vecteur colonne $\Phi'_1$

$= \{\ \Phi'_{1,1}, ..., \Phi'_{1,j}, ..., \Phi'_{1,nml}\}$ où nml est le nombre de sous-pupilles éclairées par le front d'onde à analyser. Dans cet exemple, la matrice de détermination, constituée de p lignes et de mnl colonnes, est l'inverse d'une matrice [MI] d'interaction qui est déterminée de la façon suivante:

$$[MI]_{i,j} = \phi'_{i,1xLegj}$$

où $\phi'_{i,1xLegj}$ est la valeur moyenne de la dérivée de la phase au niveau de la sous-pupille $SP_i$ d'un front d'onde dont l'expression est donnée par le $j^{ème}$ polynôme de Legendre affecté d'un coefficient 1.

La détermination du profil de la phase d'une seule ligne d'onde permet déjà de déterminer certains des paramètres de forme de la surface d'onde que sont les paramètres des formes à symétrie de révolution (courbure, aberration sphérique ...). Cela permet aussi de connaître la projection des aberrations sur l'axe de la ligne d'onde détectée (basculement selon cet axe, projection de la coma, etc.).

Considérons maintenant l'acquisition de n lignes d'onde $L_i$ distinctes. Chaque ligne d'onde est reconstruite, par exemple selon la méthode décrite précédemment. On obtient n ensembles $V_i$ correspondant chacun à la reconstruction de la ligne d'onde $L_i$ et permettant d'exprimer la phase de la ligne $L_i$.

La reconstruction $REC_s$ de la surface d'onde peut alors être faite par une méthode dérivée de la méthode zonale décrite dans l'art antérieur et permettant de reconstruire zone par zone la cartographie de la phase du front d'onde à partir des lignes reconstruites. Cette méthode est particulièrement bien adaptée aux fronts d'onde présentant des points de singularité. L'inconvénient cependant d'une telle méthode dans le procédé selon l'invention est qu'elle nécessite l'acquisition de nombreuses lignes d'onde; les moyens d'acquisition et de calcul à mettre en oeuvre sont alors importants ainsi que le temps nécessaire à l'analyse du front d'onde.

Avantageusement, la reconstruction $REC_s$ de la surface d'onde du procédé selon l'invention est une reconstruction polynomiale, basée sur une décomposition de la phase $\Phi$ du front d'onde sur une base de polynômes orthogonaux sur le support de ce front d'onde. Pour décrire ces moyens de reconstruction, nous prenons tout d'abord comme exemple le cas particulier d'un front d'onde à support circulaire. La phase $\Phi$ peut alors être décomposée sur une base d'un nombre m de polynômes de Zernike $Z_i$. On suppose effectuée l'acquisition de n lignes d'onde distinctes ($n \geq 2$). Toutes ces lignes sont sensiblement concourantes en leur centre et font entre elles un angle de $\pi/n$. Les lignes d'onde sont reconstruites sur une base de p polynômes de Legendre. On cherche à passer de l'information en ligne (vecteurs $V_i$) à la reconstruction de la surface d'onde, c'est-à-dire aux paramètres $a_i$ définis par

$$\Phi = \Sigma\ a_i\ Z_i$$

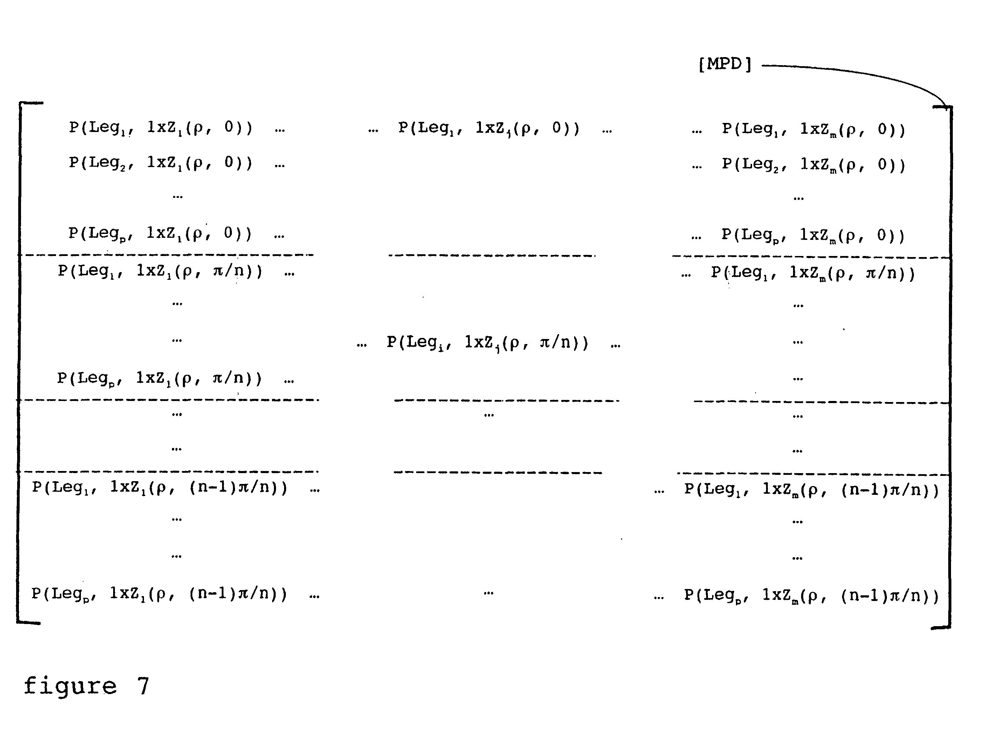

Pour ce faire, on définit par exemple une matrice [MP] dite matrice de projection dont une expression est obtenue à partir d'une projection des p premiers polynômes de Legendre sur les m polynômes de Zernike choisis pour reconstruire la surface d'onde. Par exemple, cette matrice [MP] peut être obtenue en inversant une matrice [MPD] de projection directe dont une expression est donnée par la figure 7. Sur cette figure, chaque terme $P(Leg_i, 1xZ_j(\rho, (n-k)\pi/n))$ représente un produit scalaire du $i^{ème}$ polynôme de Legendre, $(1 \leq i \leq p)$, avec le $j^{ème}$ polynôme de Zernike affecté d'un coefficient 1, $(1 \leq j \leq m)$, exprimé en coordonnées polaire $(\rho, \theta)$, ce polynôme étant pris en $\theta_k = k\ \pi/n$ avec k entier, k prenant les valeurs 0 $(\theta_0 = 0)$ à (n-1) $(\theta_{n-1} = (n-1)\ \pi/n$.

La matrice [MPD] comporte ainsi n x p lignes (n x p correspondant au produit du nombre n de lignes préalablement reconstruites par la taille p du vecteur $V_i$ caractérisant une ligne d'onde $L_i$) et m colonnes (m correspondant au nombre de paramètres $a_i$ à calculer). Chaque colonne j comprend les valeurs du produit scalaire entre chaque polynôme de Legendre $Leg_i$ $(1 \leq i \leq p)$ et le $j^{ème}$ polynôme de Zernike $Z_j$ $(\rho, \theta_k)$, $\theta_k$ prenant successivement les n valeurs correspondant aux angles des n lignes d'onde préalablement reconstruites. Ce produit scalaire doit conserver la propriété d'orthogonalité des polynômes de Zernike sur le support défini par la géométrie des n lignes d'onde.

La matrice de projection [MP] est alors multipliée par le vecteur formé de l'ensemble des éléments des vecteurs de reconstruction $V_i$ et comprenant donc n x p éléments. Par exemple, pour calculer les 36 premiers polynômes de Zernike à l'aide d'un module de détection comprenant 100 microlentilles cylindriques et après une série de huit acquisitions, il faudra définir une matrice MP de dimension 36 x 80 (l'utilisation des 1C premiers polynômes de Legendre peut être suffisante d'où p = 10).

Lorsque l'on veut acquérir plus de deux lignes d'onde, il peut être nécessaire de faire tourner mécaniquement le module de détection d'une ligne d'onde. Il faut donc pouvoir s'affranchir d'éventuels basculements introduits par la platine de rotation. Le procédé selon l'invention permet de s'affranchir de ces basculements. Reprenons le cas d'un front d'onde à support circulaire et la reconstruction de ce front d'onde sur une base de polynômes de Zernike telle qu'elle a été décrite précédemment. L'expression des polynômes de Zernike en coordonnées polaires $(\rho, \theta)$ fait apparaître que dans tous les polynômes, les termes de basculement (en $\rho$) sont toujours d'ordre azimutal égal à 1, c'est à dire qu'ils varient en $\rho\cos\theta$ ou $\rho\sin\theta$. Il est donc possible, à partir de n'importe quel front d'onde décomposé sur les polynômes de Zernike, de déterminer les coefficients des deux polynômes de basculement ($2^{ème}$ et $3^{ème}$ polynômes de Zernike, respectivement en $\rho\cos\theta$ et $\rho\sin\theta$) qui

annulent globalement tout terme en $\rho\cos\theta$ et $\rho\sin\theta$ dans le front d'onde. Tous les autres coefficients restent inchangés. Dans une variante du procédé selon l'invention, pour s'affranchir d'éventuelles erreurs sur le basculement du front d'onde introduites par des opérations mécaniques visant à acquérir plusieurs lignes d'onde, la reconstruction REC comporte en outre une étape consistant lors de la reconstruction $REC_i$ de chaque ligne d'onde, à annuler l'influence du polynôme p dans l'expression de la phase de la ligne reconstruite. Lors de la reconstruction $REC_s$ de la surface d'onde, on peut ainsi déterminer les coefficients exacts, non affectés par les éventuelles erreurs sur le basculement du front d'onde, des polynômes de Zernike choisis pour la décomposition (hormis les coefficients des polynômes de basculement). Les valeurs des deux coefficients annulant globalement tout terme en $\rho\cos\theta$ et $\rho\sin\theta$ dans le front d'onde sont donnés par la reconstruction $REC_S$. Les basculements initiaux du front d'onde peuvent cependant être déterminés à partir des deux lignes d'onde acquises à 0° et 90°.

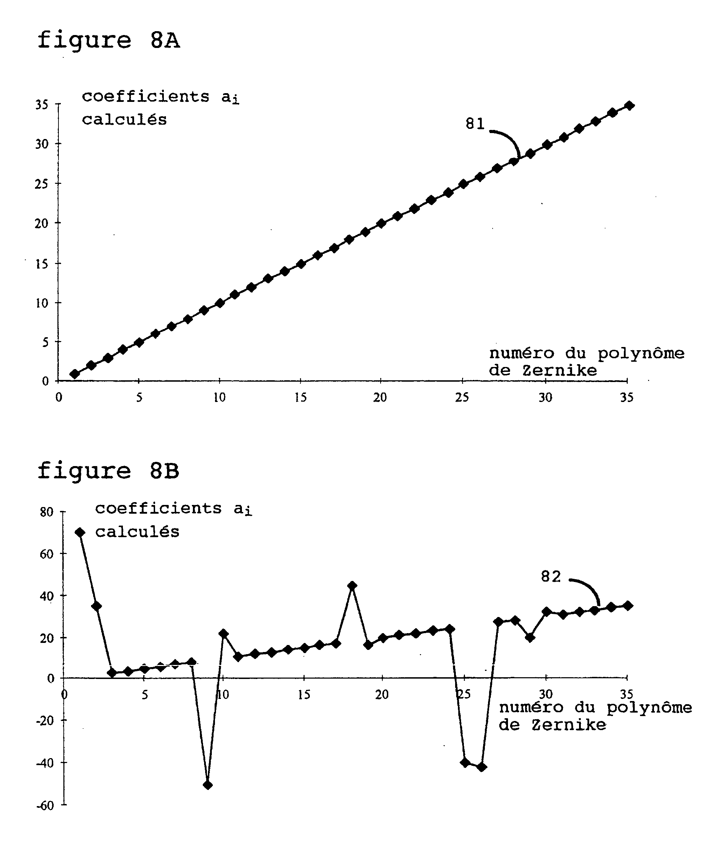

Les figures 8A et 8B illustrent par un exemple le résultat d'une étape de reconstruction mise en oeuvre dans le procédé selon l'invention, telle qu'elle a été décrite précédemment. Dans cet exemple, on simule un front d'onde à support circulaire, incident dans l'analyseur selon l'invention, ce front d'onde se décomposant sur la base des 36 premiers polynômes de Zernike et étant défini par 36 coéfficients $a_i$ affectés à ces polynômes. Dans cet exemple, le coefficient $a_i$ est pris égal à i ($a_1 = 1$, $a_2 = 2$, etc). Ces valeurs ne correspondent pas à un front d'onde réel mais permettent d'illustrer clairement le résultat obtenu. On suppose que le procédé selon l'invention comporte l'acquisition de 8 lignes d'onde concourantes, 2 lignes consécutives faisant un angle de 22,5° entre elles. L'acquisition est dans cet exemple obtenue par rotation d'un module de détection d'une ligne d'onde, et pour chaque ligne d'onde, la platine de translation introduit un basculement donné. On simule la réponse donnée par l'analyseur selon l'invention sur chacune des 8 lignes d'onde en tenant compte de la forme du front d'onde et des basculements introduits par la platine, puis on applique l'étape de reconstruction de la surface d'onde telle qu'elle a été décrite précédemment. La figure 8A donne, en fonction du numéro des polynômes de Zernike sur lesquels se font la décomposition, la valeur du coefficient calculé par le procédé selon l'invention en appliquant lors de la reconstruction, l'étape permettant de s'affranchir des basculements telle que précédemment décrite. La courbe 81 obtenue montre que l'on retrouve parfaitement pour chaque polynôme de Zernike, le coefficient de départ qui lui était affecté. La figure 8B représente une courbe 82 obtenue par la même reconstruction mais sans l'étape de correction des basculements. Dans ce cas, il apparaît clairement des erreurs de reconstruction de la surface d'onde. Cet exemple montre ainsi une caractéristique supplémentaire du procédé selon l'invention permettant une analyse ligne par ligne de la surface d'un front d'onde.

Bien entendu, le procédé d'analyse selon l'invention ne se limite pas à un front d'onde à support circulaire. Dans le cas d'un front d'onde à support rectangulaire par exemple, une reconstruction polynomiale peut également être faite. On suppose par exemple que (n+1) lignes d'onde ont été acquises, n lignes d'onde strictement parallèles et la dernière sécante à toutes les autres, par exemple à angle droit. La reconstruction peut se faire sur un principe similaire à celui décrit précédemment mais cette fois les m polynômes à considérer peuvent être choisis dans la base des polynômes de Legendre (2 dimensions) ou celle des polynômes de Tchébycheff.

Les dispositifs selon l'invention sont destinés à de multiples applications de laboratoires ou industrielles. Ils donnent à un opérateur une assistance quantitative lorsque celui-ci réalise des réglages d'expérimentations optiques. Il permet la caractérisation de composants ou de systèmes optiques à la longueur d'onde choisie par l'opérateur (ou éventuellement en lumière polychromatique: le dispositif analyse alors le front d'onde moyen). La configuration particulière avec deux dispositifs placés à 90° l'un de l'autre permet d'extraire la grande majorité des polynômes de Zernike d'ordre azimutal inférieur ou égal à deux (avec repliement des autres polynômes). Ces polynômes correspondent entre autre aux aberrations les plus classiques: basculements, défocalisation, aberration sphérique, coma, astigmatisme (0°).

Enfin, ce dispositif permet l'analyse d'éléments aussi divers que les lames de phase, les hologrammes (transmission ou réflexion), les écrans à cristaux liquides, etc.

## Revendications

1. Procédé de mesure d'un nombre donné (m) de paramètres de forme ($a_i$) de la surface d'un front d'onde optique de support donné, les paramètres de forme étant les coefficients d'une décomposition de la phase ($\phi$) du front d'onde sur une base de polynômes orthogonaux ($P_i$) sur ledit support, **caractérisé en ce qu'**il comporte:

   - l'acquisition ($ACQ_i$) d'au moins deux lignes distinctes du front d'onde comprenant pour chaque ligne d'onde ($L_i$), la détection optique ($DET_i$) de ladite ligne délivrant un signal électrique la caractérisant, et le traitement (TS) dudit signal permettant de déterminer un ensemble $K_i$ de paramètres $k_{ij}$ proportionnels aux valeurs de la phase du front d'onde, ou d'une dérivée $n^{ème}$ de ladite phase, mesurées sur ladite ligne ($L_i$),
   - le calcul (REC), à partir des ensembles $K_i$ correspondant auxdites lignes d'onde, desdits paramètres de forme ($a_i$), comportant pour chaque ligne d'onde ($L_i$), une étape ($REC_i$) de reconstruction de ladite ligne, consistant à exprimer à partir de l'ensemble $K_i$, la phase ou une dérivée $n^{ème}$ de la phase, sur une base de polynômes orthogonaux sur ladite ligne, puis à calculer à partir des lignes reconstruites, lesdits paramètres de forme ($a_i$).

2. Procédé selon la revendication 1, **caractérisé en ce que** pour chaque ligne d'onde ($L_i$), la reconstruction ($REC_i$) de la ligne ($L_i$) consiste à exprimer la phase ($\Phi_i$) de ladite ligne d'onde en fonction d'un nombre prédéterminé p de polynômes de Legendre donnant ainsi pour chaque ligne d'onde ($L_i$) un vecteur de reconstruction ($V_i$) constitué des coefficients affectant lesdits polynômes de Legendre.

3. Procédé selon la revendication 2, **caractérisé en ce que**, chaque ligne d'onde étant sécante à au moins une autre ligne, le calcul (REC) des paramètres de formes ($a_i$) est fait par une méthode de type zonale.

4. Procédé selon la revendication 2, **caractérisé en ce que** le support du front d'onde étant circulaire et qu'un nombre prédéterminé n de lignes d'onde distinctes étant reconstruites, lesdites lignes étant sensiblement concourantes en leur centre et faisant un angle $\pi/n$ entre elles, la base de polynôme ($P_i$) sur laquelle est décomposée la phase ($\phi$) du front d'onde est une base constituée d'un nombre prédéterminé m, correspondant au nombre de paramètres de forme recherchés, de polynômes de Zernike orthogonaux et le calcul desdits paramètres de forme ($a_i$) est obtenu par la multiplication du vecteur formé de l'ensemble des éléments des vecteurs ($V_i$) de reconstruction des n lignes d'onde, avec une matrice de projection ([MP]) dont une expression est obtenue à partir d'une projection des p polynômes de Legendre sur les m polynômes de Zernike.

5. Procédé selon la revendication 4, **caractérisé en ce que** les polynômes de Zernike étant exprimés en coordonnées polaires ($\rho$, $\theta$), l'étape (REC) de calcul des paramètres de forme ($a_i$) comprend en outre une étape consistant, lors de chaque reconstruction ($REC_i$) d'une ligne d'onde ($L_i$) à annuler l'influence du polynôme p, ce qui annule globalement tout terme en $\rho\cos\theta$ et en $\rho\sin\theta$ dans l'expression du front d'onde, cette étape permettant de s'affranchir d'éventuelles erreurs sur le basculement du front d'onde introduites par des opérations mécaniques visant à acquérir plusieurs lignes d'onde.

6. Procédé selon la revendication 2, **caractérisé en ce que** le support du front d'onde étant rectangulaire, (n+1) lignes d'onde distinctes étant reconstruites, n supérieur ou égal à 2, n lignes étant strictement parallèles entre elles et la dernière sécante à toutes les autres, la base de polynômes ($P_i$) sur laquelle est décomposée la phase du front d'onde est une base constituée par un nombre prédéterminé m, correspondant au nombre de paramètres de forme recherchés, de polynômes de Legendre à deux dimensions, orthogonaux, et le calcul des paramètres de forme ($a_i$) est obtenu par la multiplication du vecteur formé de l'ensemble des éléments des vecteurs de reconstruction ($V_i$) des n lignes d'onde, avec une matrice de projection dont une expression est obtenue à partir d'une projection des p polynômes de Legendre sur les m polynômes de Legendre à deux dimensions.

**7.** Dispositif de mesure de paramètres de forme ($a_i$) de la surface d'un front d'onde optique, **caractérisé en ce qu'**il comporte :

- des moyens (MACQ) d'acquisition d'au moins deux lignes distinctes du front d'onde comprenant des moyens (MDET) de détection optique délivrant pour chacune desdites lignes un signal électrique la caractérisant, et des moyens (MTS) de traitement du signal permettant de déterminer un ensemble $K_i$ de paramètres $k_{ij}$ proportionnels aux valeurs de la phase du front d'onde, ou d'une dérivée $n^{\text{ème}}$ de ladite phase, mesurées sur ladite ligne ($L_i$), et
- des moyens (MREC) de calcul, à partir des ensembles $K_i$ correspondant auxdites lignes d'onde, desdits paramètres de forme ($a_i$).

**8.** Dispositif selon la revendication 7, **caractérisé en ce que** les moyens de détections (MDET) comprennent au moins un module de détection (HLIN) d'une ligne d'onde comprenant un ensemble de systèmes optiques disposés linéairement et un détecteur, chaque système optique collectant une portion de la ligne d'onde et la focalisant en une tache lumineuse sur le détecteur, la position de ladite tache permettant de déterminer la pente locale de la phase de ladite ligne au niveau du système optique considéré.

**9.** Dispositif selon la revendication 8, **caractérisé en ce que** l'ensemble des systèmes optiques est une ligne (LML) de microlentilles cylindriques.

**10.** Dispositif selon l'une quelconque des revendications 7 à 9, **caractérisé en ce que** les moyens de détection (MDET) de la ligne d'onde comprennent en outre une fente (F) solidaire du module de détection (HLIN), permettant de présélectionner la zone du front d'onde (FO) contenant ladite ligne.

**11.** Dispositif selon l'une quelconque des revendications 7 à 10, **caractérisé en ce que** les moyens de détection (MDET) comprennent en outre des moyens de rotation du module (HLIN).

**12.** Dispositif selon l'une quelconque des revendications 7 à 11, **caractérisé en ce que** les moyens de détection (MDET) comprennent en outre des moyens de translation du module (HLIN).

**13.** Dispositif selon l'une quelconque des revendications 7 à 12, **caractérisé en ce que** les moyens de détection (MDET) comprennent 2 modules de détection ($HLIN_1$, $HLIN_2$) perpendiculaires l'un à l'autre, et une lame séparatrice (SEP) positionnée de telle sorte que l'un des modules ($HLIN_1$) détecte une ligne d'onde ($L_1$) et l'autre module ($HLIN_2$) détecte une autre ligne d'onde ($L_2$) perpendiculaire à la première.

**Claims**

**1.** Method for measuring a given number (m) of shape parameters ($a_i$) of the surface of an optical wavefront of given support, the shape parameters being the coefficients of a breakdown of the phase ($\phi$) of the wavefront on a base of orthogonal polynomials ($P_i$) on said format, **characterised in that** it comprises:

- the acquisition ($ACQ_i$) of at least two separate lines of the wavefront comprising, for each wave line ($L_i$), the optical detection ($DET_i$) of said line delivering an electrical signal characterising it, and the processing (TS) of said signal making it possible to determine a set $K_i$ of parameters $k_{ij}$ proportional to the values of the phase of the wavefront, or of an $n^{\text{th}}$ derivative of said phase, measured on said line ($L_i$),
- the calculation (REC), from the sets $K_i$ corresponding to said wave lines, of the said shape parameters ($a_i$), comprising, for each wave line ($L_i$), a step ($REC_i$) of reconstruction of said line, consisting in expressing from the set $K_i$, the phase or an $n^{\text{th}}$ derivative of the phase, on a basis of orthogonal polynomials on said line, then in calculating said shape parameters ($a_i$) from the reconstructed lines.

**2.** Method according to claim 1, **characterised in that** for each wave line ($L_i$), the reconstruction ($REC_i$) of the line ($L_i$) consists in expressing the phase ($\Phi_i$) of said wave line as a function of a predetermined number p of Legendre polynomials thus giving for each wave line ($L_i$) a reconstruction vector ($V_i$) consisting of coefficients assigned to said Legendre polynomials.

**3.** Method according to claim 2, **characterised in**

**that**, with each wave line being secant to at least one other line, the calculation (REC) of the shape parameters ($a_i$) is carried out by a zonal type method.

4. Method according to claim 2, **characterised in that**, the support of the wavefront being circular and a predetermined number n of separate wave lines being reconstructed, said lines being substantially concurrent at their centres and forming an angle of $\pi/n$ between each other, the polynomial base ($P_i$) on which the phase ($\phi$) of the wavefront is broken down is a base consisting of a predetermined number m, corresponding to the number of sought shape parameters, of orthogonal Zernike polynomials and the calculation of said shape parameters ($a_i$) is obtained by the multiplication of the vector formed by all of the elements of the reconstruction vectors ($V_i$) of the n wave lines, by a projection matrix ([MP]) an expression of which is obtained from a projection of the p Legendre polynomials onto the m Zernike polynomials.

5. Method according to claim 4, **characterised in that**, the Zernike polynomials being expressed in polar co-ordinates ($\rho,\theta$), the step (REC) of calculation of the shape parameters ($a_i$) furthermore comprises a step consisting, during each reconstruction ($REC_i$) of a wave line ($L_i$) in cancelling out the effect of the polynomial $\rho$, which broadly cancels out all terms in $\rho\cos\theta$ and in $\rho\sin\theta$ in the expression of the wavefront, this step making it possible to escape any errors due to the tilt of the wavefront that are introduced by mechanical operations aimed at acquiring several wave lines.

6. Method according to claim 2, **characterised in that**, the support of the wavefront being rectangular, (n+1) separate wave lines being reconstructed, where n is greater than or equal to 2, n lines being strictly parallel with each other and the last one secant to all the others, the base of polynomials ($P_i$) on which the wavefront phase is broken down is a base consisting of a predetermined number m, corresponding to the number of sought shape parameters, of two-dimensional orthogonal Legendre polynomials, and the calculation of the shape parameters ($a_i$) is obtained by the multiplication of the vector formed by all of the elements of the reconstruction vectors ($V_i$) of the n wave lines, by a projection matrix an expression of which is obtained from a projection of the p Legendre polynomials onto the m two-dimensional Legendre polynomials.

7. Device for measuring shape parameters ($a_i$) of the surface of an optical wavefront, **characterised in that** it comprises :

- means (MACQ) of acquisition of at least two separate lines of a wavefront comprising optical detection means (MDET) delivering for each of said lines an electrical signal characterising it, and signal-processing means (MTS) making it possible to determine a set $K_i$ of parameters $k_{ij}$ proportional to the values of the phase the wavefront, or of an $n^{th}$ derivative of said phase, measured on said line ($L_i$), and

- means (MREC) of calculating said shape parameters ($a_i$), from the sets ($K_i$) corresponding to said wave lines.

8. Device according to claim 7, **characterised in that** the detection means (MDET) comprise at least one module (HLIN) for detecting a wave line comprising a set of optical systems disposed linearly and a detector, each optical system collecting a portion of the wave line and focussing it into a light spot on the detector, the position of said spot making it possible to determine the local slope of the phase of said line at the level of the optical system in question.

9. Device according to claim 8, **characterised in that** the set of optical systems is a line (LML) of cylindrical microlenses.

10. Device according to any one of claims 7 to 9, **characterised in that** the wave line detection means (MDET) furthermore comprise a slit (F) integral with the detection module (HLIN), making it possible to pre-select the zone of the wavefront (FO) containing said line.

11. Device according to any one of claims 7 to 10, **characterised in that** the detection means (MDET) furthermore comprise means for rotating the module (HLIN).

12. Device according to any one of claims 7 to 11, **characterised in that** the detection means (MDET) furthermore comprise means for translating the module (HLIN).

13. Device according to any one of claims 7 to 12, **characterised in that** the detection means (MDET) comprise 2 detection modules ($HLIN_1$, $HLIN_2$), perpendicular to one another, and a separating blade (SEP) positioned such that one of the modules ($HLIN_1$) detects one wave line ($L_1$) and the other module ($HLIN_2$) detects another wave line ($L_2$) perpendicular to the first one.

**Patentansprüche**

1. Verfahren zur Messung einer gegebenen Anzahl

(m) von Formparametern ($a_i$) der Oberfläche einer optischen Wellenfront mit gegebenem Träger, wobei die Formparameter die Koeffizienten einer Zerlegung der Phase ($\Phi$) der Wellenfront auf einer Basis von orthogonalen Polynomen ($P_i$) auf diesem Träger sind, **dadurch gekennzeichnet, daß** es folgendes umfaßt:

- die Erfassung ($ACQ_i$) von mindestens zwei verschiedenen Linien der Wellenfront, die für jede Wellenlinie ($L_i$) die optische Erfassung ($DET_i$) der Linie, die ein sie kennzeichnendes elektrisches Signal liefert, und die Verarbeitung ($TS$) dieses Signals umfaßt, die die Bestimmung einer Einheit $K_i$ von Parametern $k_{ij}$ gestattet, die zu den auf dieser Linie ($L_i$) gemessenen Werten der Phase der Wellenfront oder einer n-ten Ableitung dieser Phase proportional sind,

- die Berechung ($REC$) dieser Formparameter ($a_i$) aus den diesen Wellenlinien entsprechenden Einheiten $K_i$, die für jede Wellenlinie ($L_i$) einen Schritt ($REC_i$) der Rekonstruktion dieser Linie umfaßt, der darin besteht, daß ausgehend von der Einheit $K_i$ die Phase oder eine n-te Ableitung der Phase auf einer Basis von orthogonalen Polynomen auf dieser Linie ausgedrückt wird und dann aus den rekonstruierten Linien diese Formparameter ($a_i$) errechnet werden.

2. Verfahren nach Anspruch 1, **dadurch gekennzeichnet, daß** bei jeder Wellenlinie ($L_i$) die Rekonstruktion ($REC_i$) der Linie ($L_1$) darin besteht, daß die Phase ($\Phi_i$) dieser Wellenlinie in Abhängigkeit von einer vorbestimmten Anzahl p von Legendre-Polynomen ausgedrückt wird, was auf diese Weise für jede Wellenlinie ($L_i$) einen Rekonstruktionsvektor ($V_i$) ergibt, der aus den diesen Legendre-Polynomen zugeordneten Koeffizienten besteht.

3. Verfahren nach Anspruch 2, **dadurch gekennzeichnet, daß**, wenn jede Wellenlinie mindestens eine andere Linie schneidet, die Berechung ($REC$) der Formparameter ($a_i$) mit Hilfe einer zonalen Methode vorgenommen wird.

4. Verfahren nach Anspruch 2, **dadurch gekennzeichnet, daß**, wenn der Träger der Wellenfront kreisförmig ist und eine vorbestimmte Anzahl n von verschiedenen Wellenlinien rekonstruiert werden, wobei diese Linien sich in ihrem Mittelpunkt im wesentlichen schneiden und miteinander einen Winkel $\pi/n$ bilden, die Polynombasis ($P_i$), auf der die Phase ($\Phi$) der Wellenfront zerlegt wird, eine Basis ist, die aus einer der Anzahl von gesuchten Formparametern entsprechenden vorbestimmten Anzahl m von orthogonalen Zernike-Polynomen besteht, und die Berechnung dieser Formparameter ($a_i$) durch Multiplikation des aus der Einheit der Elemente der Rekonstruktionsvektoren ($V_i$) der n Wellenlinien gebildeten Vektors mit einer Projektionsmatrix ($[MP]$) erhalten wird, von der ein Ausruck aus einer Projektion der p Legendre-Polynome auf die m Zernike-Polynome erhalten wird.

5. Verfahren nach Anspruch 4, **dadurch gekennzeichnet, daß**, wenn die Zernike-Polynome in polaren Koordinaten ($\rho$, $\theta$) ausgedrückt werden, der Schritt ($REC$) der Berechnung der Formparameter ($a_i$) außerdem einen Schritt umfaßt, der darin besteht, daß bei jeder Rekonstruktion ($REC_i$) einer Wellenlinie ($L_i$) der Einfluß des Polynoms $\rho$ annulliert wird, was insgesamt jeden Term in $\rho\cos\theta$ und in $\rho\sin\theta$ in dem Ausdruck der Wellenfront annulliert, wobei dieser Schritt gestattet, sich von eventuellen Fehlern im Kippen der Wellenfront freizumachen, die durch mechanische Operationen, die zur Erfassung mehrerer Wellenlinien dienen, eingeführt werden.

6. Verfahren nach Anspruch 2, **dadurch gekennzeichnet, daß**, wenn der Träger der Wellenfront rechteckig ist, wobei (n+1) Wellenlinien rekonstruiert werden, n größer oder gleich 2 ist, n Linien zueinander genau parallel sind und die letzte alle anderen schneidet, die Basis von Polynomen ($P_i$), auf der die Phase der Wellenfront zerlegt wird, eine Basis ist, die aus einer der Anzahl von gesuchten Formparametern entsprechenden vorbestimmten Anzahl m von zweidimensionalen, orthogonalen Legendre-Polynomen besteht, und die Berechnung der Formparameter ($a_i$) durch Multiplikation des aus der Einheit der Elemente der Rekonstruktionsvektoren ($V_i$) der n Wellenlinien gebildeten Vektors mit einer Projektionsmatrix erhalten wird, von der ein Ausdruck aus einer Projektion der p Legendre-Polynome auf die m zweidimensionalen Legendre-Polynome erhalten wird.

7. Vorrichtung zur Messung von Formparametern ($a_i$) der Oberfläche einer optischen Wellenfront, **dadurch gekennzeichnet, daß** sie folgendes umfaßt:

- Mittel (MACQ) zum Erfassen von mindestens zwei verschiedenen Linien der Wellenfront, die optische Erfassungsmittel (MDET), die für jede der Linien ein sie kennzeichnendes elektrisches Signal liefern, und Mittel (MTS) zur Verarbeitung des Signals umfassen, die die Bestimmung einer Einheit $K_i$ von Parametern $k_{ij}$ gestatten, die zu den auf dieser Linie ($L_i$) gemessenen Werten der Phase der Wellenfront oder einer n-ten Ableitung dieser Phase proportional sind, und

- Mittel (MREC) zur Berechnung dieser Formparameter ($a_i$) aus den diesen Wellenlinien entsprechenden Einheiten $K_i$.

**8.** Vorrichtung nach Anspruch 7, **dadurch gekennzeichnet, daß** die Erfassungsmittel (MDET) mindestens ein Modul (HLIN) zur Erfassung einer Wellenlinie umfassen, das eine Einheit von linear angeordneten optischen Systemen und einen Detektor umfaßt, wobei jedes optische System einen Teil der Wellenlinie sammelt und sie in einem Lichtfleck auf dem Detektor fokussiert, wobei die Lage des Flecks die Bestimmung der örtlichen Neigung der Phase dieser Linie auf Höhe des betreffenden optischen Systems gestattet.

**9.** Vorrichtung nach Anspruch 8, **dadurch gekennzeichnet, daß** die Einheit der optischen Systeme eine Linie (LML) von zylindrischen Mikrolinsen ist.

**10.** Vorrichtung nach einem der Ansprüche 7 bis 9, **dadurch gekennzeichnet, daß** die Mittel (MDET) zur Erfassung der Wellenlinie außerdem einen mit dem Erfassungsmodul (HLIN) fest verbundenen Spalt (F) aufweisen, der die Vorwahl der diese Linie enthaltenden Zone der Wellenfront (FO) gestattet.

**11.** Vorrichtung nach einem der Ansprüche 7 bis 10, **dadurch gekennzeichnet, daß** die Erfassungsmittel (MDET) außerdem Mittel zum Drehen des Moduls (HLIN) aufweisen.

**12.** Vorrichtung nach einem der Ansprüche 7 bis 11, **dadurch gekennzeichnet, daß** die Erfassungsmittel (MDET) außerdem Mittel zur Translationsbewegung des Moduls (HLIN) aufweisen.

**13.** Vorrichtung nach einem der Ansprüche 7 bis 12, **dadurch gekennzeichnet, daß** die Erfassungsmittel (MDET) zwei zueinander senkrechte Erfassungsmodule ($HLIN_1$, $HLIN_2$) und eine Teilerplatte (SEP) aufweisen, die so positioniert ist, daß eines der Module ($HLIN_1$) eine Wellenlinie ($L_1$) und das andere Modul ($HLIN_2$) eine andere Wellenlinie ($L_2$) erfaßt, die zur ersten senkrecht ist.

EP 1 012 549 B1

## figure 1

ACQ₁  DET₁

ACQᵢ  DETᵢ

DÉTECTION

ACQₙ  DETₙ

TS₁

TSᵢ

TSₙ

TRAITEMENT
DE SIGNAL

. . .

. . . . .

K₁

Kᵢ

Kₙ

RECONSTRUCTION
DE CHAQUE
LIGNE D'ONDE Lᵢ

RECᵢ

REC

RECONSTRUCTION
DE LA
SURFACE D'ONDE

RECₛ

PARAMÈTRES DE FORME
DE LA SURFACE D'ONDE

## figure 2

L₁

L₂

FOC

α

α

L₃

L₄

13

## figure 3A

FO

MDET

F

HLIN

MACQ

$L_i$

O ⟶ y ⟶ O'

↓x

MTS

| MOYENS DE TRAITEMENT DU SIGNAL |

MREC

| MOYENS DE RECONSTRUCTION |

PARAMÈTRES DE FORME DE LA SURFACE D'ONDE

## figure 3B

FO

$L_i$

F

Y

LML

BD

MDET

ROT

O

X

O'

TRANS

HLIN

# figure 4

figure 5A

figure 5B

figure 6

EP 1 012 549 B1

[MPD]

$$
\begin{bmatrix}
P(Leg_1, \; 1xZ_1(\rho, 0)) & \dots & \dots & P(Leg_1, \; 1xZ_i(\rho, 0)) & \dots & \dots & P(Leg_1, \; 1xZ_m(\rho, 0)) \\
P(Leg_2, \; 1xZ_1(\rho, 0)) & \dots & & & & \dots & P(Leg_2, \; 1xZ_m(\rho, 0)) \\
& \dots & & & & & \dots \\
P(Leg_p, \; 1xZ_1(\rho, 0)) & \dots & & & & \dots & P(Leg_p, \; 1xZ_m(\rho, 0)) \\
P(Leg_1, \; 1xZ_1(\rho, \pi/n)) & \dots & & & \dots & P(Leg_1, \; 1xZ_m(\rho, \pi/n)) \\
& \dots & & & & & \dots \\
& \dots & & \dots & P(Leg_i, \; 1xZ_i(\rho, \pi/n)) & \dots & & \dots \\
P(Leg_p, \; 1xZ_1(\rho, \pi/n)) & \dots & & & & & \dots \\
& \dots & & & \dots & & \dots \\
& \dots & & & & & \dots \\
P(Leg_1, \; 1xZ_1(\rho, (n-1)\pi/n)) & \dots & & & \dots & P(Leg_1, \; 1xZ_m(\rho, (n-1)\pi/n)) \\
& \dots & & & & & \dots \\
& \dots & & & & & \dots \\
P(Leg_p, \; 1xZ_1(\rho, (n-1)\pi/n)) & \dots & & \dots & & \dots & P(Leg_p, \; 1xZ_m(\rho, (n-1)\pi/n))
\end{bmatrix}
$$

figure 7

figure 8A

figure 8B